Europäisches Patentamt

European Patent Office

Office européen des brevets

(11) Publication number: **0 128 519 B1**

# EUROPEAN PATENT SPECIFICATION

(45) Date of publication of patent specification: **21.11.91**  (51) Int. Cl.⁵: **G01P 3/46**

(21) Application number: **84106449.6**

(22) Date of filing: **06.06.84**

(54) **Brushless tachometer.**

(30) Priority: **14.06.83 US 504121**
**13.12.83 US 560838**

(43) Date of publication of application:
**19.12.84 Bulletin 84/51**

(45) Publication of the grant of the patent:
**21.11.91 Bulletin 91/47**

(84) Designated Contracting States:
**CH DE FR GB IT LI SE**

(56) References cited:
**EP-A- 0 023 123**
**EP-A- 0 024 969**
**GB-A- 913 170**
**US-A- 4 088 943**

**ELEKTROTECHNISCHE ZEITSCHRIFT, vol. 28,
no. 11, May 21, 1976, pages 337-338; Berlin,
DE, W. VOLKRODT: "Spulenwicklungen um
einen Zahn"**

**"Basic Digital Electronics with MSI Applica-
tions", John A. Dempsey, Addison Wesley,
1977, page 301**

(73) Proprietor: **KOLLMORGEN CORPORATION
10 Mill Pond Lane
Simsbury, CT 06070(US)**

(72) Inventor: **Coulon, Philip Serge
Rt. 1, Box 439-C
Radford, VA 24141(US)**

(74) Representative: **Königseder-Egerer, Claudia D.
Zugspitzstrasse 65
W-8104 Grainau(DE)**

## Description

This invention relates to rate sensitive devices, and more particularly, to brushless tachometers and servo systems using such tachometers.

Semi-conductor switches find ever increasing use for controlling commutation in bushless DC motors and variable frequency AC motors. Such motors have the advantage of high operating speeds and increased useful life. Furthermore, they are more readily utilizable with electronic control systems.

In order to achieve the benefits of the solid state commutation circuitry when the motors are used in position or velocity servo systems, however, it is necessary to also utilize a compatible rate feedback device which likewise avoids mechanical commutation or other moving mechanical contact switches.

Brushless motors are capable of reaching higher speeds than conventional DC motors. The same is true for brushless rate sensitive feedback devices. A conventional DC tachometer, however, cannot reach similarly high speeds due to brush bounce at high speeds caused by small commutator eccentricities.

Conventional tachometers also have a volts per commutator bar limitation which limits the output potential over a given speed range. As a result, such tachometers cannot achieve the higher sensitivities potentially available with brushless rate sensing devices.

In the past, several methods of achieving brushless rate feedback for position and velocity servos have been devised.

One such method employs an incremental sensor which indicates each increment of movement and produces a signal having a frequency proportional to speed. The frequency signal is then converted to either an analog signal proportional to speed or a digital word indicating speed. Such systems are relatively inexpensive but lack precise speed information at very low speeds near zero rpm. In order to provide any rate information at very low speeds (other than zero rpm) the rotor must move until a mark is detected. The time between mark detection can be too long to provide a meaningful frequency indication of speed. Also, such systems do not inherently provide directional information and become more complex when directional information is required.

Another approach is to use a resolver to indicate shaft position. Resolvers provide AC waveforms according to the sine and cosine of the shaft position. These waveforms can be converted into digital words or analog signals proportional to shaft position which, in turn, can be used to provide rate information. This method provides relatively good results but is quite expensive, particularly if low speed accuracy is required.

Optical encoder systems have also been employed. In such systems, a digital word appears at the encoder output representing the shaft position and this information can be processed to provide rate information. This approach is less expensive than that using resolvers, but suffers from low speed limitations similar to those with the incremental sensor mentioned above.

Still another approach is to use an alternator with rotating permanent magnets. The signal produced by the stator windings is proportional in amplitude and frequency to the shaft speed. Where directional speed information is not required, diodes rectifying the alternator output will provide a DC signal proportional to speed. Bi-polar switching transistors controlled by position sensors can be used to get a bi-directional speed indication. However, these approaches using an alternator have a dead band near zero rpm because of the threshold conduction properties of diodes and transistors used in such systems.

US-A-4,088,943 discloses a brushless tachometer comprising stator windings having a grounded neutral, one field effect transistor switch per winding, and grounded back-to-back type diodes across the field effect transistors.

The system according to the invention overcomes the aforementioned shortcomings by disclosing a DC tachometer comprising an alternator including a stator, a rotor and windings for producing alternating signals proportional to the speed of rotation; a rotor position sensor; a switching circuit with at least two field effect transistors per winding arranged in a bridge configuration so that the respective ends of the windings may be connected alternately via circuit paths either to ground or to an output signal summing junction, said switching circuit being controlled by the position sensor to produce a DC signal proportional to the rotor speed from said alternating signals, wherein said position sensor indicates position by a digital code; further including a programmable read only memory connected to the position sensor for converting said digital code into control signals for said field effect transistor switching circuit and thus the commutation signals in accordance with the position sensor signals.

In a preferred embodiment, there is disclosed a motor control system of the type including a motor and a tachometer in a servo loop, the servo loop including a summing circuit for summing a command signal and a tachometer feedback signal at the summing junction (SJ), wherein said tachometer is of the type including a rotor, a stator and windings for producing alternating signals proportional to the speed of rotation, and a rotor position sensor connected to a programmable read only memory; and wherein said system includes a switching circuit, with at least two field effect transistors per winding, arranged in a bridge configuration so that the respective ends of the windings may be connected alternately via circuit paths either to ground or to an output signal summing junction; said field effect transistors being connected to said PROM and controlled by said position sensor to produce a DC signal proportional to the rotor speed from said alternating signals; and input resistors for developing said tachometer feedback signal supplied to said summing junction and being located respectively between said windings and said at least two field effect transistors.

In a preferred embodiment, the system further includes means for limiting the potential across said switching circuit to the operating range of said field effect transistors.

The brushles tachometer included in the system according to this invention uses field effect transistors (FETs) for switching the output signal from a multiphased stator winding of a permanent magnet alternator. The resistive conduction characteristics of the FETs make it possible to achieve linearity in the zero speed region which cannot be achieved using bi-polar semi-conductor devices.

A read only memory is utilized to control the commutation switching from the alternator output in accordance with a position sensor control. The combination results in a moderately priced brushless DC tachometer providing a bi-polar speed signal with linearity in the zero speed region. The alternator generated speed signal, and the associated solid state commutation switches, are directly connected to the current summing junction of the servo amplifier controlling the motor in the system. The tachometer according to the invention thus functions in a current mode rather than in the conventional voltage mode. This approach has been found to substantially increase low speed sensitivity without requiring expensive high voltage switching components. It has also been found that lower ripple in the output signal can be achieved using line-to-neutral commutation rather than line-to-line commutation.

The foregoing and other objects of the invention will become more apparent from the following detailed description of the accopanying drawings.

Fig. 1 is a schematic diagram according to one embodiment of the invention.

Fig. 2 is a partial schematic diagram showing one phase of the tachometer of Fig. 1 connected to the servo loop for motor control operating in a voltage mode.

Fig. 3 is a partial schematic diagram showing the connection of one phase of a preferred tachometer arrangement connected to the servo loop for motor control operating in a current mode.

Fig. 4 is a schematic diagram showing a complete system of the type partially shown in Fig. 3.

Fig. 5 illustrates a servo control system according to another embodiment of the invention wherein the commutator switching is from line-to-neutral.

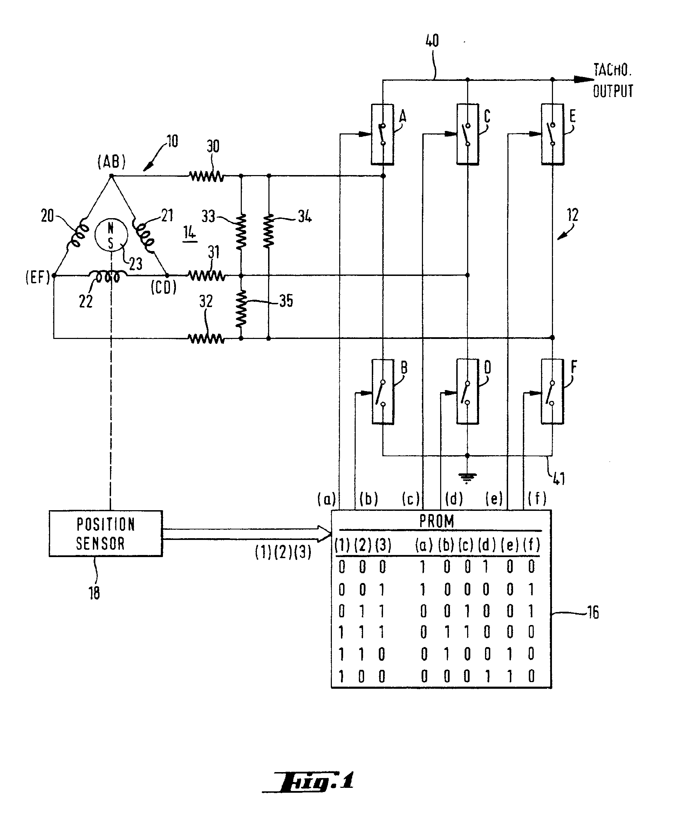

The tachometer system shown in Fig. 1 includes a three-phase alternator 10 coupled to a six transistor switching bridge 12 via a voltage divider network 14. The switching logic is provided by a programmable read only memory (PROM) 16 addressed by a rotor position sensor 18.

More particularly, the alternator 10 includes stator windings 20 to 22 connected in a three phase delta configuration and a permanent magnet rotor 23 mechanically coupled to position sensor 18 which can be a conventional array of Hall sensors arranged to provide a six position indication in a three digit code. Other types of position sensors can also be used such as optical or magnetic encoders.

The three digit position code from position sensor 18 is supplied as the address input (1), (2), (3) to a 3 x 6 PROM 16. The logic table stored in PROM 16 is shown in Fig. 1. For example, if the input address from the position sensor is "000", as in the top line of the table, the digital word "100100" appears on the six output lines (a) to (f) meaning that lines (a) and (d) are high ("1") and that the remaining lines (b), (c), (e) and (f) are low ("0"). Resistors 30 to 35 make up the three phase voltage divider network 14. Resistors 30 to 32 are connected in series in the lines between the windings of alternator 10 and the switches of switching bridge circuit 12. Resistors 33 to 35 are connected between the three phase lines. The resistance values are selected to reduce the alternator output voltages to values within the range that can be handled by the switching transistors.

Transistor bridge circuit 12 is made up of field effect transistors (FET's) which are CMOS (complementary metal oxide semiconductors) bilateral switches. These transistors are available at modest cost and have adequate capacity for most tachometer applications. The peak controllable voltage is in the range of between +8 and -8 Volts. The junction AB between windings 20 and 21 is connected to switches A and B in bridge circuit 12 via resistor 30, whereas junction CD between windings 21 and 22 is connected to switches C and D via resistor 31 and junction EF between windings 20 and 22 is connected to switches E and F via resistor 32. Output lines (a) to (f) from PROM 16 are connected to control the conductive states of transistor switches A to F, respectively. Switches B, D and F are connected to a common ground connection 41, whereas switches A, C and E are connected to a common tachometer output line 40.

In operation, the position sensor 18 and PROM 16 render the switches conductive in pairs according to rotor position to provide a DC signal with a value and polarity proportional to the rotor speed and direction. It is significant that FET's are used in the switching bridge circuit since these transistors do not have a threshold offset as is the case with the normal transistors. As a result, the output voltage is proportional to speed throughout the range of operation and particularly in the range near zero.

Alternator 10 is preferably of a type which produces flat top sine waves so that the voltage is reasonably constant during the conduction intervals of the respective switches to reduce ripple in the tachometer output. Preferably, the alternating outputs have a trapezoidal shape and are flat from 60 to 120 degrees and from 240 to 300 degrees. Alternator designs to achieve this objective are described in co-pending applications "Flux Contoured Rotary Electromagnetic Machine" by Thomas R. England, and "Brushless DC Tachometer" by Robert L. Fisher, filed on even date with the present application.

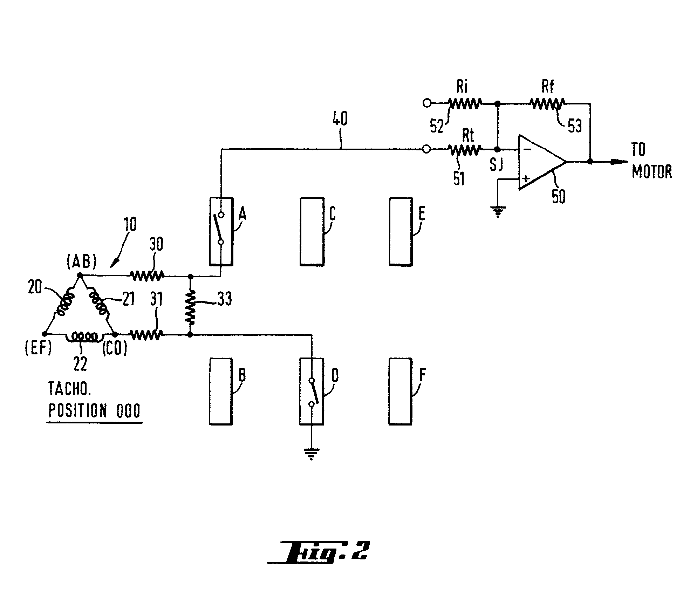

Although the circuit in Fig. 1 is suitable for many installations, it does have a limited range due to the voltage divider and limited range of the FET's. This can pose a problem at low speeds, where output signals are small, resulting in poor signal to noise ratios. A significant improvement in sensitivity, however, can be achieved as is shown in Figs. 2 to 4.

Fig. 2 shows a typical connection of the tachometer arrangement of Fig. 1 to an operational amplifier 50 in the servo loop controlling a motor. The tachometer output line 40 is connected to the summing junction SJ through an input resistor 51. The servo command signal is supplied to the summing junction SJ through an input resistor 52. A feedback resistor 53 is connected across the amplifier. The summing junction SJ is connected to the inverting input of amplifier 50 and the noninverting input is connected to ground.

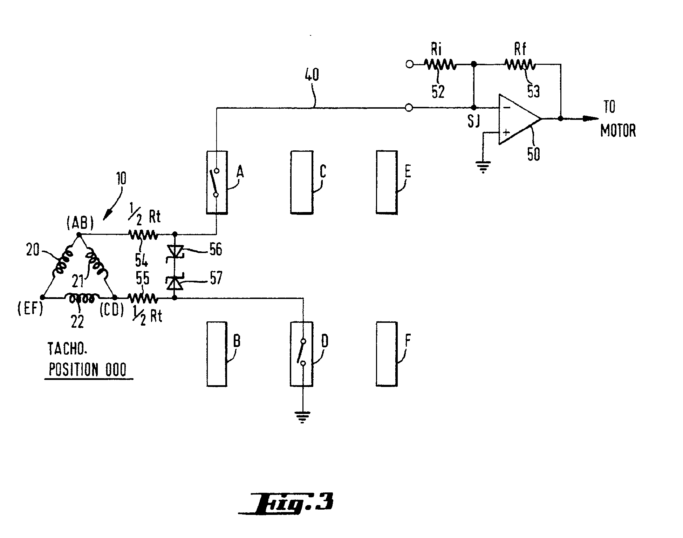

For position "000" of the rotor where the switches A and D are conductive (Fig. 1), the potential generated by windings 20 to 22 is reduced by the voltage divider resistors 30, 31 and 33 to produce a signal on line 40 proportional to speed. A command voltage representing desired motor speed is supplied to resistor 52. Input resistors 51 and 52 convert the applied voltage signals to current signals which are summed at summing junction SJ. In the usual servo loop operation, a small error signal is developed at the summing junction which drives the amplifier 50 and determines the motor energization. The servo loop automatically adjusts the motor energization until the motor and tachometer speed correspond to the desired speed at which point the tachometer signal offsets the command signal. As previously mentioned, sensitivity in this arrangement is limited by the voltage range of the transistor switches. Sensitivity of the system can be substantially improved in accordance with a preferred embodiment of this invention as shown in Fig. 3 wherein the tachometer is operated in a current mode rather than a voltage mode. To achieve this, the resistance seen by the tachometer including the input resistance $R_t$ is split and placed in the lines between the windings and the switching bridge. Junction AB of the windings 20 and 21 is connected to switch A through one half of the input resistor 54, and junction CD of windings 22 and 21 is connected to switch D through the other half of the input resistor 55. A bipolar pair of Zener diodes 56 and 57 is connected between the lines connecting to switches A and D. Line 40 at the tachometer output is connected directly to summing junction SJ.

In a summing amplifier circuit, such as that including amplifier 50, the summing junction is at virtual ground. Therefore, when switches A and D are conductive, as shown, the entire path through the switches is at virtual ground. The signal developed by windings 20-22 appears as a current through resistors 54 and 55 which is then applied directly to summing junction SJ. Since the circuit through switches A and D remains at virtual ground when the switches are conductive, the operating voltage range of the transistors is not exceeded even at maximum output from the alternator 10. Thus, sensitivity can be substantially increased. Zener diodes 56 and 57 are selected having threshold values which limit the potential across the windings to the operating range of the transistors so that the operating ranges are not exceeded when the switches are in the non-conductive state.

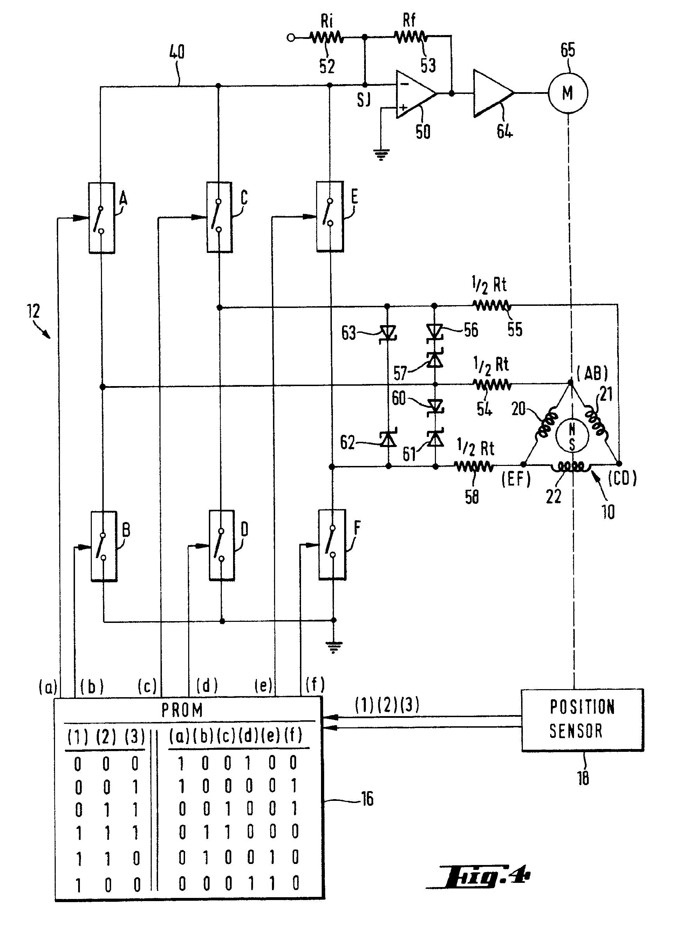

Fig. 4 is a schematic diagram of the complete system of the type shown in Fig. 3. The output of operational amplifier 50 is supplied to a drive amplifier 64 which, in turn, is connected to drive motor 65. Motor 65 and alternator 10 of the tachometer have a common shaft. Junction AB of the tachometer windings 20 and 21 is connected to switches A and B in bridge circuit 12 via resistor 54, whereas junction CD is connected to switches C and D via resistor 55 and junction EF is connected to switches E and F via 58. Zener diodes 56 and 57 and 60 to 63 are connected across the three pairs of lines between the windings and the switches to limit the winding output voltages when the respective switches are non-conductive.

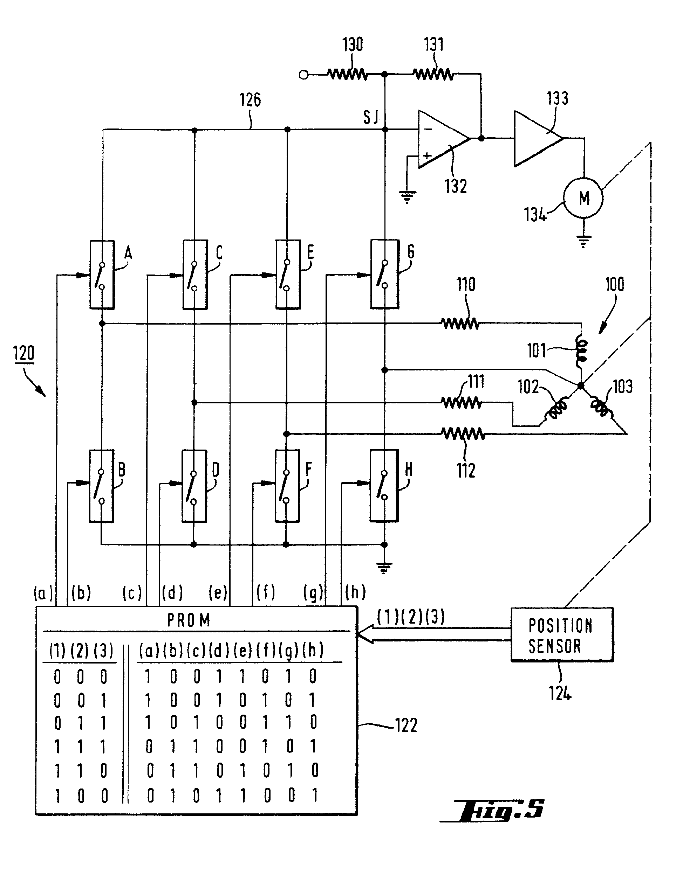

Fig. 5 is a schematic diagram of another embodiment of the invention wherein the commutation is on a line-to-neutral basis rather than a line-to-line basis in order to reduce ripple content on the tachometer output signal.

The alternator 100 includes windings 101-103 wound in a three-phase wye configuration. One end of winding 101 is connected to switches A and B of a switching bridge circuit 120 via a resistor 110, one end of winding 102 is connected to switches C and D via resistor 111 and one end of winding 103 is connected to switches E and F via resistor 112. The other ends of windings 101-103 are connected to switches G and H. Switches A to H are FET's of the type previously described (Fig. 1).

Switches B, D, F and H are connected to ground whereas switches A, C, E, and G are connected to a common tachometer output line 126. Resistors 110-112 are the input resistors of the summing circuit for developing the tachometer output current supplied to summing junction SJ via output line 126. A resistor 130 connected to the summing junctions receives the command signal. Resistor 131 provides negative feedback around operational amplifier 132. The summing junction is connected to the inverting input of amplifier 132 and the non-inverting input thereof is connected to ground. The output of amplifier 132 is supplied to a drive amplifier 133 which, in turn, controls energization of motor 134.

Motor 134, alternator 100 and a position sensor 124 are coupled to a common shaft. The position sensor 124 provides a three digit code representative of six shaft positions, and the output code therefrom is supplied as the address to a 32x8 PROM 122. The table stored in PROM 122 is shown in Fig. 5. The outputs (a) to (h) are connected to control the conductive states of switches A to H, respectively.

Except for differences in the switching logic and the lower ripple in the tachometer output, the system of Fig. 5 operates similarly to the one of Fig. 4. It should be noted that in Fig. 5 the Zener diodes are not required to protect the FET switches in bridge circuit 120 since it is possible to connect the open winding across the unused one of resistors 110-112. For example, when the rotor is in position "000" (top line of table stored in PROM 122), switches A, D, E and G are conductive. As a result, current flows from ground through switch D, resistor 111, winding 102, winding 101, resistor 110 and switch A to summing junction SJ to thereby provide the tachometer output signal. Switches E and G connect resistor 112 across the remaining winding 103 to limit the generated potential to a low value within the operating range of transistors in switching bridge circuit 120.

Although only a few embodiments have been described in detail, it should be obvious that there are other variations within the scope of this invention as defined by the claims.

## Claims

1. A DC tachometer comprising an alternator (10) including a stator, a rotor (23), and windings (20-22) for producing alternating signals proportional to the speed of rotation; a rotor position sensor (18); a switching circuit (12) with at least two field effect transistors per winding, arranged in a bridge configuration so that the respective ends of the windings may be connected alternately via circuit paths either to ground or to an output signal summing junction, said switching circuit being controlled by the position sensor to produce a DC signal proportional to the rotor speed from said alternating signals, wherein said position sensor indicates position by a digital code; further including a programmable read-only memory (16) connected to the position sensor for converting said digital code into control signals for said field effect transistor switching circuit (12) and thus the commutation signals in accordance with the position sensor signals.

2. A motor control system of the type including a motor (65, 134) and a tachometer in a servo loop, the servo loop including a summing circuit for summing a command signal and a tachometer feedback signal at the summing junction (SJ), wherein said tachometer (10, 100) is of the type including a rotor, a stator and windings (20-22, 101-103) for producing alternating signals proportional to the speed of rotation, and a rotor position sensor (18, 124) connected to a programmable read-only memory (16,122); and wherein said system includes a switching circuit (12, 120), with at least two field effect transistors per winding, arranged in a bridge configuration so that the respective ends of the windings may be connected alternately via circuit paths either to ground or to an output signal summing junction; said field effect transistors being connected to said PROM and controlled by said position sensor to produce a DC signal proportional to the rotor speed from said alternating signals; and input resistors (54, 55, 58, 110-112) for developing said tachometer feedback signal supplied to said summing junction and being located respectively between said windings and said at least two field effect transistors.

3. The system of claim 2 further including means for limiting the potential across said switching circuit to the operating range of said field effect transistors.

4. The system of claim 3 wherein said means for limiting the potential across said switching circuit includes Zener diodes (56-63).

5. The system of claim 3 wherein said means for limiting the potential across said switching circuit includes switches for connecting resistance across said windings when not supplying current to said summing junction.

## Revendications

1. Tachymètre à courant continu comprenant un alternateur (10) comportant un stator, un rotor (23) et des enroulements (20 à 22) pour produire des signaux alternatifs proportionnels à la vitesse de rotation, un capteur de position de rotor (18) ; un circuit de commutation (12) avec au moins deux transistors à effet de champ par enroulement, disposés en une configuration de pont de sorte que les extrémités respectives des enroulements peuvent être connectées en alternance par l'intermédiaire des trajets du circuit soit à la masse soit à une jonction de sommation de signal de sortie, le circuit de commutation étant commandé par le capteur de position afin de produire un signal à courant continu proportionnel à une vitesse de rotor depuis les signaux alternatifs, dans lequel le capteur de position indique la position par un code numérique ; comportant de plus une mémoire morte programmable (16) reliée au capteur de position pour convertir le code numérique en signaux de commande pour le circuit de commutation à transistors à effet de champ (12) et ainsi les signaux de commutation en conformité avec les signaux du capteur de position.

2. Système de commande de moteur du type comportant un moteur (65, 134) et un tachymètre dans une boucle asservie, la boucle asservie comportant un circuit de sommation pour sommer un signal d'ordre et un signal de contre-réaction de tachymètre au niveau de la jonction de sommation (SJ) dans lequel ledit tachymètre (10, 100) est du type comportant un rotor, un stator et des enroulements (20 à 22, 101 à 103) pour produire des signaux alternatifs proportionnels à une vitesse de rotation, et un capteur de position de rotor (18, 124) connecté à une mémoire morte programmable (16, 122) ; dans lequel le système comporte un circuit de commutation (12, 120) avec au moins deux transistors à effet de champ par enroulement, disposés dans une configuration en pont de sorte que les extrémités respectives des enroulements peuvent être reliées en alternance par l'intermédiaire des trajets du circuit soit à la masse soit à une jonction de sommation de signal de sortie ; les transistors à effet de champ étant reliés à la mémoire morte programmable et commandés par le capteur de position pour produire un signal à courant continu proportionnel à la vitesse du rotor depuis les signaux alternatifs ; et des résistances d'entrée (54, 55, 58, 110) à 112) pour développer le signal de contre-réaction de tachymètre délivré a la jonction de sommation et étant situé respectivement entre les enroulements et au moins les deux transistors à effet de champ.

3. Système selon la revendication 2, comportant de plus un moyen pour limiter le potentiel aux bornes du circuit de commutation à la plage de fonctionnement des transistors à effet de champ.

4. Système selon la revendication 3, dans lequel le moyen pour limiter le potentiel aux bornes du circuit de commutation comporte des diodes Zener (56 à 63).

5. Système selon la revendication 3, dans lequel le moyen pour limiter le potentiel aux bornes du circuit de commutation comporte des interrupteurs pour connecter des résistances aux bornes des enroulements lorsqu'il n'y a pas de courant délivré à la jonction de sommation.

## Patentansprüche

1. Ein Gleichstrom-Tachometer mit einem Wechselstrom-Generator (10), der einen Stator, einen Rotor (23) und Wicklungen (20-22) zum Erzeugen von Wechselstromsignalen proportional zur Umdrehungsgeschwindigkeit aufweist; einen Rotorpositions-Sensor (18); einen Schaltkreis (12) mit mindestens zwei Feldtransistoren pro Wicklung, angeordnet als Brückenschaltung, so daß die entsprechenden Wicklungsenden wahlweise über Stromleitungen entweder mit Masse oder mit einer Ausgangssignal-Summierschaltung verbunden werden können, wobei der genannte Schaltkreis durch den Positions-Sensor gesteuert wird und ein Gleichstromsignal erzeugt, das proportional der Rotorgeschwindigkeit der genannten Wechselstromsignale ist, und in dem der genannte Positions-Sensor die Position in Form eines Digital-Codes anzeigt; und der weiterhin einen programmierbaren Lesespeicher (16) aufweist, der mit dem Positions-Sensor verbunden ist und den genannten Digital-Code in Steuersignale für den Feldtransistor-Schaltkreis (12) umwandelt und auf diese Weise die Kommutationssignale in Übereinstimmung mit den Signalen des Positions-Sensors bringt.

**2.** Ein Motorsteuersystem, das einen Motor (65, 134) und einen Tachometer in einer Servoschleife aufweist, wobei die Servoschleife einen Summierschaltkreis enthält zum Summieren eines Befehlssignals und eines Tachometer-Rückführungssignals am Summieranschluß (SJ), und der Tachometer (10, 100) einen Rotor, einen Stator und Wicklungen (20-22, 101-103) aufweist zum Erzeugen von Wechselstromsignalen proportional zur Umdrehungsgeschwindigkeit, und einen Rotorpositions-Sensor (18, 124), der mit einem programmierbaren Lesespeicher (16, 122) verbunden ist; und das System einen Schaltkreis (12, 120) enthält mit mindestens zwei Feldtransistoren pro Wicklung, angeordnet als Brückenschaltung, so daß die entsprechenden Wicklungsenden wahlweise über Stromleitungen entweder mit Masse oder mit einer Ausgangssignal-Summierschaltung verbunden werden können; und die Feldtransistoren mit dem programmierbaren Lesespeicher verbunden sind und vom genannten Positions-Sensor gesteuert werden und ein Gleichstromsignal erzeugen, das proportional der Rotorgeschwindigkeit der genannten Wechselstromsignale ist; sowie mit Eingangswiderständen (54, 55, 58, 110-112) zum Erzeugen des Tachometer-Rückführungssignals, welches auf den Summieranschluß gegeben wird, und die zwischen den Wicklungen bzw. den mindestens zwei Feldtransistoren angeordnet sind.

**3.** Das System nach Anspruch 2, das weiterhin eine Vorrichtung zur Begrenzung der Spannung zwischen dem genannten Schaltkreis und dem Bereich der genannten Feldtransistoren enthält.

**4.** Das System nach Anspruch 3, bei dem die Vorrichtung zur Begrenzung der Spannung Zener-Dioden (56-63) aufweist.

**5.** Das System nach Anspruch 3, bei dem die Vorrichtung zur Begrenzung der Spannung Schalter aufweist, um den Widerstand über den Wicklungen zu verbinden, wenn kein Strom auf den genannten Summieranschluß gegeben wird.

TACHO.
OUTPUT

40

A   C   E

10   30

(AB)

20   21   33   34   31

14

N
S

23

(EF)   (CD)

22   32   35

12

B   D   F

41

(a) (b) (c) (d) (e) (f)

POSITION
SENSOR

(1)(2)(3)

18

| PROM |
| --- |

| (1) | (2) | (3) | | (a) | (b) | (c) | (d) | (e) | (f) |
|---|---|---|---|---|---|---|---|---|---|
| 0 | 0 | 0 | | 1 | 0 | 0 | 1 | 0 | 0 |
| 0 | 0 | 1 | | 1 | 0 | 0 | 0 | 0 | 1 |
| 0 | 1 | 1 | | 0 | 0 | 1 | 0 | 0 | 1 |
| 1 | 1 | 1 | | 0 | 1 | 1 | 0 | 0 | 0 |
| 1 | 1 | 0 | | 0 | 1 | 0 | 0 | 1 | 0 |
| 1 | 0 | 0 | | 0 | 0 | 0 | 1 | 1 | 0 |

16

Fig. 1

**Fig. 2**

*Fig.3*

**Fig. 4**

| | | | | | PROM | | | | | | |
|---|---|---|---|---|---|---|---|---|---|---|---|
| (1) | (2) | (3) | | (a) | (b) | (c) | (d) | (e) | (f) | (g) | (h) |
| 0 | 0 | 0 | | 1 | 0 | 0 | 1 | 1 | 0 | 1 | 0 |
| 0 | 0 | 1 | | 1 | 0 | 0 | 1 | 0 | 1 | 0 | 1 |
| 0 | 1 | 1 | | 1 | 0 | 1 | 0 | 0 | 1 | 1 | 0 |
| 1 | 1 | 1 | | 0 | 1 | 1 | 0 | 0 | 1 | 0 | 1 |
| 1 | 1 | 0 | | 0 | 1 | 1 | 0 | 1 | 0 | 1 | 0 |
| 1 | 0 | 0 | | 0 | 1 | 0 | 1 | 1 | 0 | 0 | 1 |

Fig.5